# FASCICULE DE BREVET EUROPEEN

(11) **EP 1 597 137 B1**
(45) Date de publication et mention de la délivrance du brevet: **16.07.2008**
(21) Numéro de dépôt: 04709971.8
(22) Date de dépôt: 11.02.2004
(51) Int. Cl.: B62H 5/06, B60R 25/02

(54) **DISPOSITIF ANTIVOL POUR VEHICULES DIRIGES AU MOYEN D'UN GUIDON**
DIEBSTAHLSCHUTZVORRICHTUNG FÜR FAHRRAD-LENKSTANGE
ANTI-THEFT DEVICE FOR VEHICLES STEERED BY A HANDLEBAR

(30) Priorité: 18.02.2003 CH 241032003
(43) Date de publication de la demande: 23.11.2005
(73) Titulaire: Niedrig, Franklin Ferdinand, 2003 Neuchatel (CH)
(72) Inventeur: Niedrig, Franklin Ferdinand, 2003 Neuchatel (CH)
(74) Mandataire: Ganguillet, Cyril
(86) Numéro de dépôt international: PCT/CH2004/000078
(87) Numéro de publication internationale: WO 2004/074076

(56) Documents cités:
- US-A- 1 881 346
- US-A- 2 139 984
- PATENT ABSTRACTS OF JAPAN vol. 2000, no. 13, 5 février 2001 (2001-02-05) -& JP 2000 289667 A (NIKKOO:KK), 17 octobre 2000 (2000-10-17)

## Description

La présente invention concerne un dispositif antivol pour véhicules dirigés au moyen d'un guidon agissant sur une fourche accueillant une roue directrice, le dit dispositif comprenant des premiers moyens de solidarisation avec le guidon et des deuxièmes moyens de solidarisation avec la fourche, des moyens d'accouplement entre les dits premiers et deuxièmes moyens de solidarisation, et un dispositif d'actionnement à deux positions, une position d'utilisation du véhicule bloquant tout mouvement relatif entre les premiers et deuxièmes moyens de solidarisation et une position antivol permettant une libre rotation entre les dits premiers et deuxièmes moyens de solidarisation.

L'invention concerne en particulier un dispositif antivol de ce type, destiné aux bicyclettes.

De nombreux dispositifs antivol pour bicyclettes ont été décrits dans l'état de la technique. On peut citer à titre d'exemples ceux décrits par les documents US 6,076,381, DE 19617028, US 4,509,349, US 3,863,472, EP 0737 614, DE 4223530, DE 4222526, DE 3930143 ou DE 3439412. Ces dispositifs ont comme caractéristique commune de bloquer la rotation du guidon et de la fourche lorsque le dispositif antivol est activé. En général, ces dispositifs agissent en bloquant la rotation de la potence ou de la colonne de direction de la fourche, qui est elle-même solidaire du guidon, par exemple en faisant pénétrer une pièce de verrouillage dans une fente de la colonne de direction sous l'effet d'une clé.

Un inconvénient majeur de tels systèmes réside dans le fait que si un voleur tente de faire tourner le guidon lorsque le système antivol est enclenché, cette tentative se traduit par des contraintes mécaniques sur la ou les pièces assurant le blocage. Or, le guidon d'une bicyclette ou d'un cyclomoteur exerce de par sa configuration un bras de levier important sur la colonne de direction et, partant, sur toute pièce bloquant la rotation de celle-ci. Si de telles tentatives sont exercées de manière violente, ces pièces peuvent être déformées et, même si le dispositif antivol n'est pas forcé avec succès, il peut être néanmoins tordu et/ou détérioré, ce qui peut entraîner l'impossibilité de le débloquer ultérieurement au moyen de la clé prévue à cet effet, ou encore son non-fonctionnement normal ultérieur.

Des détériorations de ces dispositifs antivol peuvent également se produire accidentellement lors d'une tentative maladroite d'utilisation du véhicule, par n'importe quelle personne sans intention de vol, car il est en général impossible de constater sans examen attentif préalable si le dispositif antivol est enclenché ou non.

Pour pallier à ces défauts, des dispositifs antivol du type défini d'entrée, tel que celui décrit par US 2,139,984, ou celui décrit par JP 2000-289667, ont déjà été proposés.

Contrairement aux dispositifs cités plus haut, dans lesquels l'ensemble des moyens de solidarisation entre le guidon et la fourche forment un tout rigide, ce type de serrure antivol permet de libérer le guidon de la fourche grâce à un pêne d'accouplement réversible, agencé de sorte que lorsque le dispositif antivol est activé, une rotation du guidon ne transmet ni mouvement ni force à la fourche. Inversement, en position d'utilisation du véhicule, le pêne accouple et solidarise en rotation le guidon et la colonne de fourche.

Il s'ensuit qu'en position activée de l'antivol, le guidon et la fourche ne restent pas alignés, mais peuvent tourner librement l'un par rapport à l'autre, en prenant n'importe quelles positions relatives lorsque le véhicule est parqué, ce qui est immédiatement visible par tout utilisateur ou voleur s'approchant du véhicule, et peut exercer un effet dissuasif sur ces derniers.

Toutefois, les dispositifs connus dans l'état de la technique ne sont pas exempts de défauts:

Dans les dispositifs antivol connus de ce type, le passage de la position antivol à la position d'utilisation nécessite un alignement parfait du pêne avec son logement conjugué, faute de quoi la clé de serrure ne peut pas être tournée. L'utilisateur est donc obligé d'aligner la fourche avec le guidon, de s'efforcer de maintenir ceux-ci ainsi que le cadre en place, et de tourner la clé. L'ensemble de ces opérations est extrêmement mal commode et de nature à pousser les consommateurs à refuser ce type de dispositif.

Le guidon d'un véhicule à deux roues porte généralement les extrémités de plusieurs câbles, par exemple des câbles de freins. Un voleur désappointé peut être tenté par un acte de vandalisme: une rotation de plusieurs tours d'un guidon libre de tourner en position antivol arrachera ces câbles.

Enfin, on peut craindre une manipulation de la clé par inadvertance ou stupidité, lorsque le véhicule est en cours d'utilisation, ce qui entraînerait quasi obligatoirement un accident.

Le document US 1 861 346 A décrit un dispositif antivol conformément au préambule de la revendication 1.

Un premier but de l'invention est de proposer un dispositif antivol du type défini d'entrée, notamment pour des bicyclettes, mais aussi des cyclomoteurs, qui permette des mises en service/hors service aisées de la fonction antivol.

Un autre but de l'invention est de proposer un dispositif antivol de ce type qui ne permette pas ou tout au moins dissuade d'endommager le véhicule par des rotations intempestives du guidon lorsque le dispositif antivol est activé.

Un autre but de l'invention est de proposer un dispositif antivol qui ne puisse pas être neutralisé ou démonté sans disposer d'un outillage spécialisé.

Un autre but de l'invention est de proposer un dispositif antivol dont la mise en fonction ne puisse s'opérer par inadvertance en cours d'utilisation du véhicule.

Un autre but de l'invention est de proposer un dispositif antivol qui puisse être adapté au prix de modifications mineures sur des véhicules préexistants.

L'invention est réalisée par un dispositif antivol présentant les caractéristiques de la revendication 1. Un autre objet de l'invention est un dispositif antivol du type défini d'entrée, le dit dispositif d'actionnement comportant un mécanisme d'enclenchement, bloqué quand le dit dispositif d'actionnement est en position antivol, et activé quand le dispositif d'actionnement est en position d'utilisation, indépendamment des positions relatives du guidon et de la fourche.

Un autre objet de l'invention est un dispositif antivol du type défini d'entrée, présentant des moyens limiteurs de course pour limiter l'amplitude de la dite libre rotation à un arc de cercle, agencés à l'intérieur du dit dispositif antivol.

Un autre objet de l'invention est un dispositif antivol du type défini d'entrée comprenant un dispositif d'alarme acoustique activé en position antivol et désactivé en position d'utilisation, détectant les mouvements relatifs du guidon par rapport à la fourche, émettant un signal sonore après détection d'un nombre prédéterminé des dits mouvements.

Des modes d'exécution préférés du dispositif antivol selon l'invention sont définis dans les revendications dépendantes.

D'autres caractéristiques et avantages de l'invention apparaîtront à l'homme du métier de la description ci-dessous de modes d'exécution préférés, en relation avec le dessin,
dans lequel
- la figure 1 est une coupe partielle d'un cadre de bicyclette, dans son plan médian, montrant un premier mode d'exécution du dispositif antivol, dans lequel le dispositif de sécurité selon l'invention a été omis, avec la potence dans l'alignement du cadre de la bicyclette, mais la fourche tournée d'environ 90° par rapport à la position d'utilisation.
- la figure 2 est une coupe partielle d'un cadre de bicyclette, dans son plan médian, montrant un deuxième mode d'exécution du dispositif antivol, avec la potence dans l'alignement du cadre de la bicyclette et la fourche en position d'utilisation.
- la figure 3 est une coupe selon la ligne A A' de la figure 2.
- la figure 4 est une coupe verticale montrant un troisième mode d'exécution du dispositif antivol, dans lequel le dispositif de sécurité selon l'invention a été omis, appliqué a une fixation guidon-fourche du type "Head set".
- La figure 5 est une coupe selon la ligne B B' de la figure 4.
- La figure 6 et la figure 8 sont des coupes verticales selon la ligne DD' des figures 7 et 9 respectivement, montrant le mécanisme de sécurité du dispositif antivol selon l'invention.
- Les figures 7 et 9 sont des coupes selon la ligne CC' des figures 6 et 8 respectivement.
- La figure 10 est une vue schématique en coupe verticale d'un 4ème mode d'exécution.

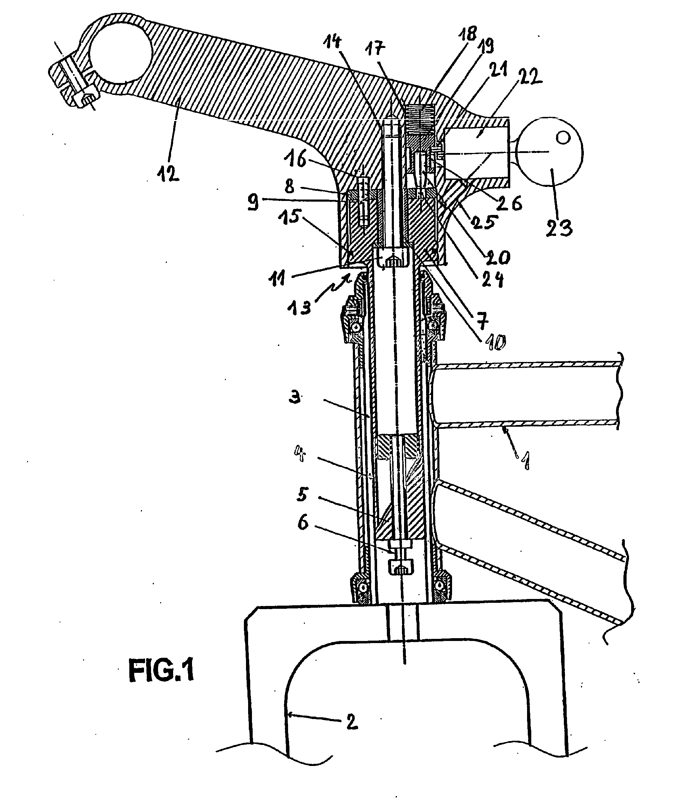

La figure 1 montre une coupe partielle, dans son plan médian, d'un cadre 1 de bicyclette, dans lequel est tourillonnée de manière connue une fourche 2. La fourche comporte une colonne de fourche 3 dans laquelle vient se loger la partie inférieure d'une colonne de potence 4. La partie inférieure de la colonne de potence 4 peut être bloquée en rotation et translation à l'intérieur de la colonne de fourche 3 au moyen d'un dispositif d'écartement 5 à vis 6, connu dans l'état de la technique. La vis 6 peut être choisie de telle sorte que sa tête se brise sous l'action d'un instrument de serrage, lorsqu'un serrage suffisant est atteint pour que la colonne de potence soit bloquée à l'intérieur de la colonne de fourche. A la place d'une vis à tête cassante, le dispositif d'écartement 5 peut également utiliser un écrou avec une tête présentant une forme telle qu'il ne peut être serré/desserré qu'avec un outil spécial. Dans les deux cas, la potence ne peut être démontée que dans le cadre d'un atelier disposant d'un outillage spécialisé.

La colonne de potence 4 est surmontée d'une tête de colonne de potence 7 cylindrique élargie. La tête de colonne 7 porte une bague d'indexation 8 dont elle est solidaire. La bague d'indexation 8 et la tête de colonne 7 sont percées d'un alésage excentré qui permet de les solidariser au moyen d'une goupille 9. La tête de colonne 7 et la bague d'indexation 8 sont également traversées par un alésage axial 10 qui permet le passage d'une vis de fixation 11. La vis de fixation 11 permet d'assembler la tête de colonne 7 à une tête de potence 12. La tête de potence 12 présente un logement 13, sous forme d'un alésage cylindrique, conjugué à la forme de la tête de colonne 7, et prolongé par un alésage fileté 14 co-axial avec l'alésage 13, pour recevoir la vis 11. Un joint d'étanchéité 15 placé dans une gorge de la tête de colonne 7 assure l'étanchéité du logement 13.

Le fond du logement 13 présente une creusure 16, fraisée en un arc de cercle dont le centre coïncide avec l'axe de la colonne de potence, qui accueille l'extrémité proéminente de la goupille 9, ce qui limite l'amplitude du mouvement de rotation relatif entre la tête de potence 12 et la colonne de potence 4 à cet arc de cercle, par exemple à 180°. Pour faciliter cette rotation, les surfaces de contact entre la tête de colonne 7 et le logement 13 peuvent être lubrifiées. En particulier, la bague d'indexation 8 peut porter une fine couche d'un lubrifiant solide, par exemple un PTFE. Le dispositif limiteur de fin de course constitué par la goupille de butée 9 et la creusure 16 permet d'éviter une rotation excessive du guidon par rapport à la fourche, qui risquerait d'abîmer les conduits des freins et de la transmission.

Dans le fond du logement 13 est creusé un deuxième logement excentré 17, dont le fond accueille un ressort 18. Le ressort 18 appuie sur la face arrière d'un coulisseau 19, portant une goupille d'accouplement 20, dont l'extrémité libre est de forme conique. Le coulisseau 19 présente une creusure latérale 26 dans laquelle pénètre un excentrique 21 proéminent d'un barillet de serrure 22 à demi-tour, actionné au moyen d'une clé 23.

La bague d'indexation 8 présente un trou 24, de diamètre légèrement supérieur à celui de l'extrémité libre de la goupille 20, agencé de telle sorte que l'axe du trou et l'axe de la goupille peuvent venir coïncider et que la goupille 20 peut pénétrer dans le trou 24 sous l'action de la clé 23. Lors du montage initial en atelier, la fourche est alors alignée avec le guidon, - par rotation de 90° dans le cas illustré par la figure 1-, et la vis 6 est serrée.

Le dispositif antivol fonctionne de la manière suivante. En position antivol, telle que représentée sur la figure 1, l'excentrique 21 est situé au-dessus de l'axe de barillet 22, appuie sur le bord de la creusure latérale 26 et repousse le ressort 18 dans le fond du logement 13. Lorsque la clé 23 est tournée de telle sorte que l'excentrique 21 vient en dessous de l'axe du barillet de la serrure, le ressort de rappel 18 pousse le coulisseau 19 vers le bas. Si le guidon, libre de tourner en position antivol, n'est pas parfaitement aligné avec la fourche, l'extrémité libre de la goupille 20 vient buter contre la surface supérieure de la bague d'indexation, ce qui n'empêche pas la rotation de la clé 23, l'excentrique 21 étant libre de se mouvoir dans la creusure latérale 26. L'enclenchement entre tête de potence et colonne de potence s'opère dès que, par une rotation appropriée du guidon ou de la fourche, la goupille 20 est alignée avec le trou 24: le ressort 18 pousse alors la goupille 20 dans le trou 24, de sorte que la colonne de potence 4 et la tête de potence 12 sont bloquées en rotation l'une par rapport à l'autre. La forme conique de la goupille 20 pénétrant dans le trou 24, combinée à la poussée du ressort 18, élimine tout jeu entre ces pièces, même si la clé n'est pas tournée parfaitement en position d'utilisation de la bicyclette. Toute action sur le guidon est alors transmise à la fourche et le véhicule peut être utilisé normalement. Lorsque la clé 23 est à nouveau tournée d'un demi-tour, l'excentrique vient au-dessus de l'axe du barillet, et, en repoussant le coulisseau 19, il extrait la goupille 20 du trou 24 en comprimant le ressort 18. La tête de potence 12 peut alors librement tourner par rapport à la tête 7 de la colonne de potence 4. Une rotation du guidon n'est donc plus transmise à la colonne de potence 4 et, partant, à la fourche, de sorte que le véhicule ne peut pas être guidé.

L'homme du métier observera qu'aucun mouvement intempestif et/ou violent du guidon n'est en mesure d'endommager la goupille 20, la bague d'indexation 8 ou la serrure 22, étant donné que ces pièces sont désaccouplées dans la position antivol.

Le corps de serrure 22 est bloqué à l'intérieur de son logement, ménagé latéralement dans la tête de potence, par une vis de blocage 25 qui n'est accessible que depuis le logement axial 13, c'est à dire seulement si le dispositif est entièrement démonté. Un tel démontage ne peut être effectué que si le dispositif de serrage 5 est lui-même démonté, ce qui, compte tenu de la rupture de la vis 6 lors du montage initial de la fourche, exige un outillage spécialisé et ne peut en aucun cas être exécuté dans un lieu public sans attirer l'attention.

L'ensemble du dispositif antivol est donc intégré dans la potence qui relie la fourche au guidon et n'est pas accessible au tiers qui ne disposent pas d'un outillage spécialisé.

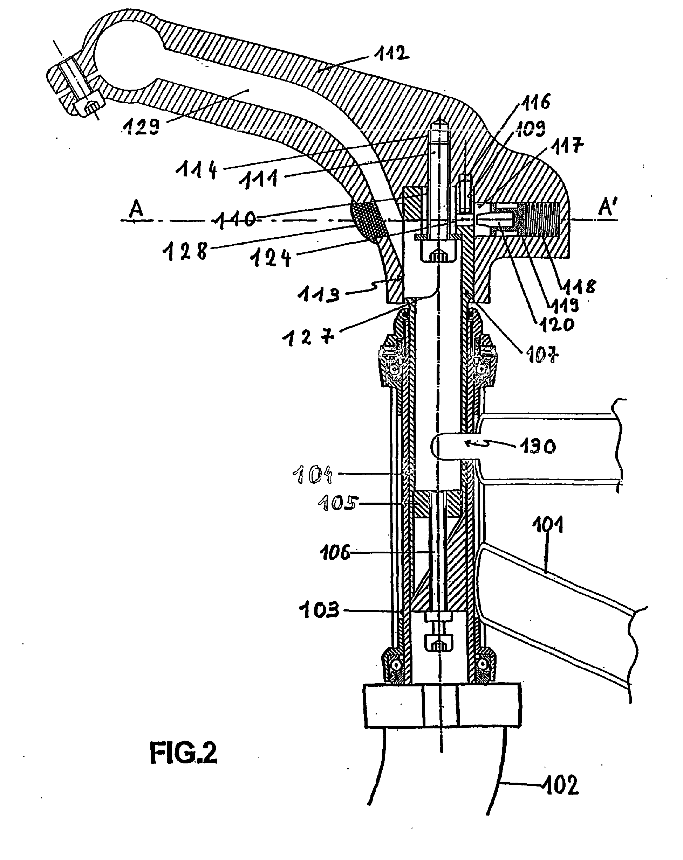

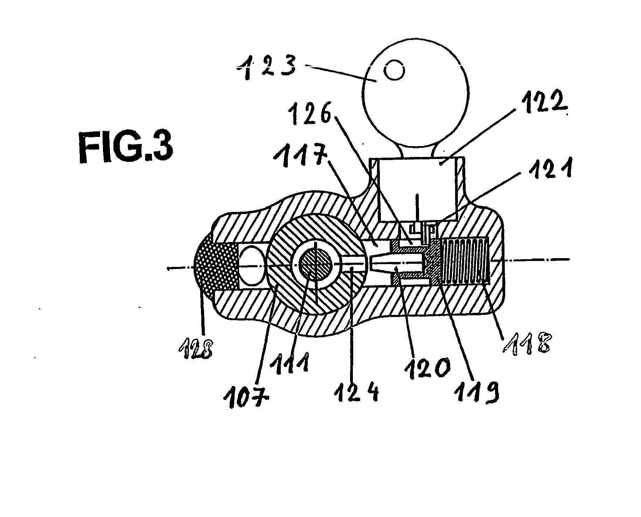

Les figures 2 et 3 montrent un deuxième mode d'exécution
dans lequel les conduites de commande des freins et de la transmission sont agencées à l'intérieur du dispositif et sont de ce fait protégées du petit vandalisme.

De manière similaire à la figure 1, la figure 2 montre une coupe partielle dans son plan médian d'un cadre 101 de bicyclette dans lequel est tourillonnée une fourche 102. La fourche comporte une colonne de fourche 103 dans laquelle vient se loger la partie inférieure d'une colonne de potence 104, qui est bloquée à l'intérieur de la colonne de fourche 103 par un dispositif d'écartement 105 à vis 106 similaire à celui représenté sur la figure 1.

La colonne de potence 104 est surmontée d'une tête de colonne 107 cylindrique partiellement creuse. La tête de colonne 107 est percée d'un alésage excentré qui reçoit une goupille 109. La tête de colonne 107 reçoit également un alésage axial 110 pour permettre un assemblage avec une tête de potence 112 au moyen d'une vis de fixation 111, de manière similaire au premier mode d'exécution. La tête de potence 112 présente un logement 113 sous forme d'un alésage cylindrique, conjugué à la forme de la tête de colonne 107 et prolongé d'un alésage fileté correspondant 114 coaxial avec l'alésage 113. Le fond du logement 113 présente une creusure 116, fraisée en arc de cercle, coaxiale avec l'axe de la colonne de potence, qui accueille l'extrémité proéminente de la goupille de butée 109, pour limiter l'amplitude du mouvement relatif de rotation entre la tête de potence 112 et la colonne de potence 104.

Dans la paroi latérale du logement 113 est creusé un deuxième logement 117, dont le fond accueille un ressort 118 appuyant sur la face arrière d'un coulisseau 119 portant une goupille d'accouplement 120, dont l'extrémité libre est de forme conique. La pièce 119 présente une creusure latérale 126 dans laquelle peut s'insérer un excentrique 121 proéminent d'un barillet de serrure 122, qui est lui-même agencé dans un logement en position latérale, et dont l'axe est perpendiculaire à la fois à l'axe de la colonne de potence et à l'axe du logement 117, comme le montre la figure 3. L'excentrique 121 qui s'insère dans la creusure du coulisseau 119 permet d'actionner la goupille 120 de manière similaire au premier mode d'exécution. La tête de colonne 107 présente un trou latéral 124 qui vient en face de la goupille 120 lorsque le guidon (non montré) vient en alignement avec la fourche. L'interaction entre la goupille 120, donc la tête de potence 112, d'une part, et le trou 124, donc la tête de colonne 107 d'autre part, est identique à celle décrite pour le premier mode d'exécution.

Dans ce mode d'exécution, la tête de potence est creuse et présente un conduit 129 qui permet de faire passer les conduites de commande des freins et de la transmission depuis le guidon, jusqu'au cadre 101, dont la branche supérieure présente une ouverture correspondante 130, en passant via une ouverture latérale 127 de la tête de colonne à l'intérieur de la colonne de potence. Un bouchon 128 obture l'ouverture de la tête de potence occasionnée par le creusement du logement 117.

L'homme du métier observera que le dispositif antivol constitué de l'ensemble tête de potence/colonne de potence intégrant les moyens de solidarisation, d'accouplement et d'actionnement des premier et deuxième modes d'exécution peut remplacer sans autre une potence d'origine d'une bicyclette.

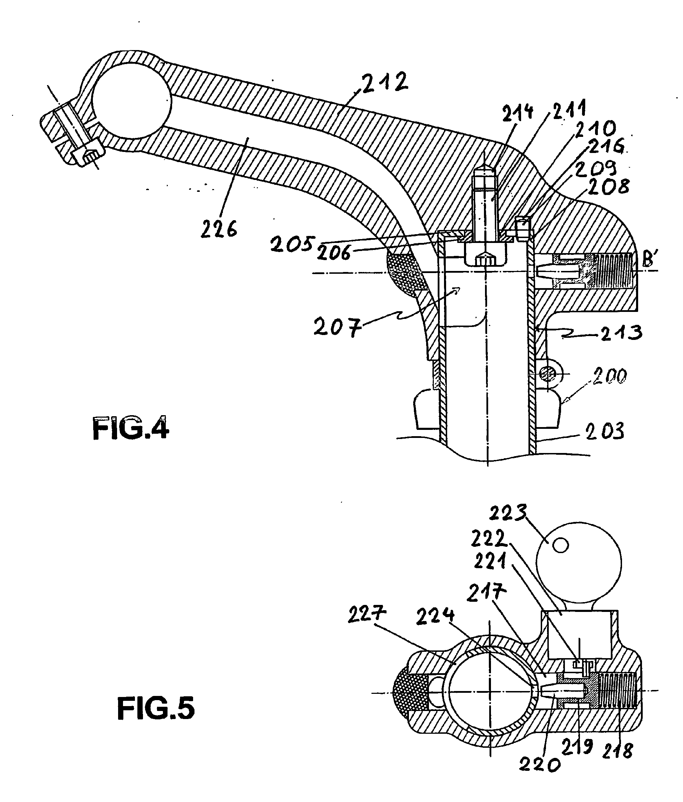

Les figures 4 et 5 montrent un troisième mode d'exécution du dispositif antivol adapté à une fixation 200 de type "head-set". La tête de potence 212 est similaire à la tête de potence 112. Un logement 213, dont le diamètre est adapté à celui d'une colonne de fourche, remplace le logement 113. La tête 207 de la colonne de fourche 203 s'engage directement dans le logement 213 de la tête de potence. La colonne de fourche se termine par une face frontale 205 percée d'un trou axial 210 par lequel passe une bague de serrage 206 et une vis de fixation 211, qui vient fixer la colonne de fourche 203 dans un alésage fileté 214 de la tête de potence, qui prolonge axialement le logement 213.

Pour l'adaptation du dispositif antivol, l'extrémité frontale 205 de la colonne de fourche est percée près d'un de ses bords, en entamant la paroi latérale, de sorte que celle-ci forme à cet endroit un épaulement 208 qui limite l'enfoncement d'une goupille de butée 209, dont l'autre extrémité pénètre dans une creusure en arc de cercle 216 similaire à la creusure 116 du deuxième mode d'exécution. La paroi latérale de la colonne de fourche est percée également d'un trou 224 en face duquel vient se placer une goupille d'accouplement à tête conique 220, lorsque la fourche et le guidon sont alignés. Le mode d'actionnement de la goupille 220 portée par le coulisseau 219 au moyen de la serrure 222 et du ressort 218 est identique à celui du deuxième mode d'exécution.

La paroi latérale de la colonne de fourche présente également, du côté opposé au trou 224, une large découpe 227 qui se place en regard du conduit intérieur 226 de la tête de potence pour laisser passer les câbles de frein et de transmission.

L'homme du métier observera que le dispositif antivol constitué par la tête de potence 212, avec la serrure et les goupilles, peut facilement remplacer la potence d'origine d'une bicyclette à fixation "head-set", au prix d'une adaptation minime, à savoir le percement de trous dans la colonne de fourche.

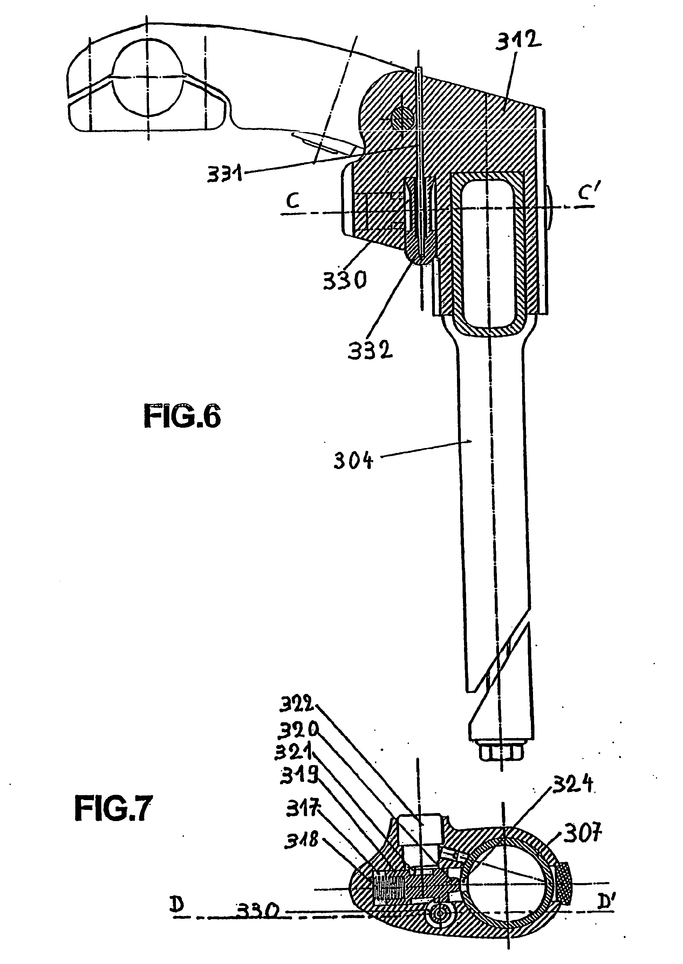

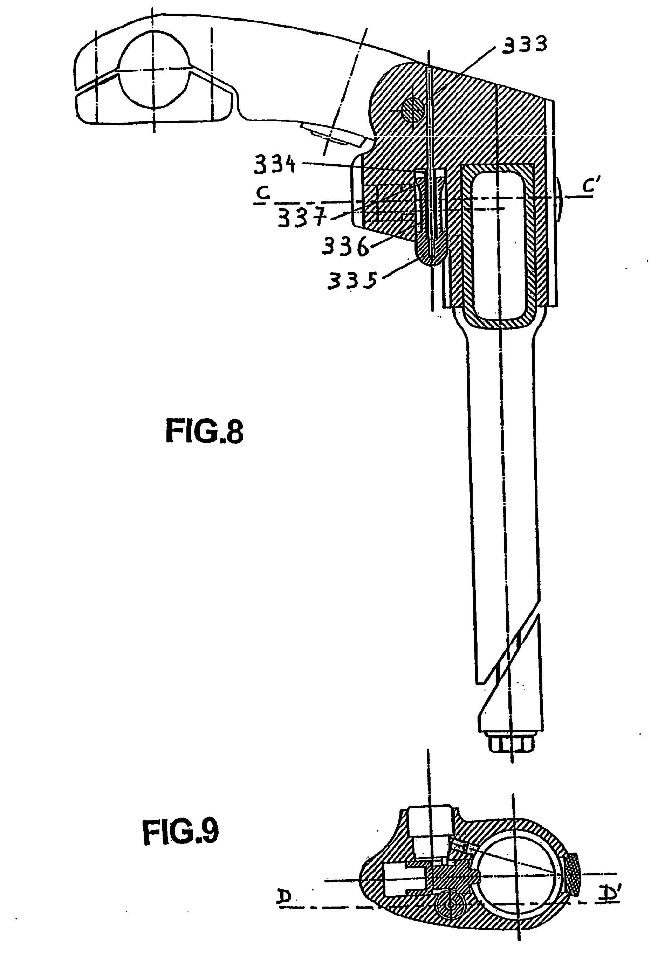

Le dispositif antivol selon l'invention est muni d'un mécanisme de sécurité empêchant le désaccouplement entre le guidon et la fourche lorsque le dispositif antivol est manoeuvré à partie de sa position d'utilisation, à moins qu'une opération supplémentaire, consciente et volontaire, ne soit effectuée par l'utilisateur en même temps qu'il actionne le dispositif d'actionnement pour passer en position antivol. Les figures 6, 7, 8 et 9 illustrent ce mécanisme de sécurité adapté à bloquer des moyens d'accouplement identiques ou similaires à ceux illustrés par les figures 1 à 5. Par souci de simplification didactique, les pièces servant à la solidarisation et à limiter la rotation entre fourche et guidon, qui ne sont pas directement nécessaires à la compréhension de ce mécanisme, ont été omises sur les figures 6 et 8.

La tête de potence 312 montrée sur les figures 6 à 9 reçoit un alésage supplémentaire formant un logement 330, dont l'axe est perpendiculaire à l'axe du logement 317, dans lequel coulisse un coulisseau 319. Comme le montrent les figures 7 et 9, le coulisseau comprend une tête d'accouplement conique 320, l'ensemble du coulisseau étant venu d'une pièce. Le coulisseau pourrait également porter une goupille d'accouplement comme dans les modes d'exécution décrits précédemment. Le coulisseau est actionné par un ressort 318 et un excentrique 321 d'une serrure 322 de la même manière que décrit précédemment.

Le logement 330 est prolongé par une forure 331 coaxiale avec l'axe du logement, débouchant à la surface supérieure de la tête de potence. Le logement accueille un bouton de sécurité 332. Ce bouton est lui-même creusé d'un alésage coaxial avec l'axe du logement, qui reçoit une tige 333 suffisamment longue pour traverser la forure 331, et un ressort de rappel 334 entourant la tige. Comme le montrent les figures 6 et 8, le bouton de sécurité 332 peut coulisser dans le logement sous l'effet du ressort de rappel 334 entre une position haute montrée sur la figure 6, dans laquelle la tige 333 dépasse de la surface de la tête de potence, et une position basse, où la tige ne dépasse pas de cette surface. Le bouton de sécurité présente une tête cylindrique arrondie 335, qui dépasse plus ou moins du logement selon la position du bouton, comme le montrent les figures 6 et 8, une partie centrale cylindrique amincie 336 et une base tronconique 337. Le ressort 334 a tendance à repousser le bouton 332 hors de son logement, mais ce mouvement est limité par l'interaction entre le bouton 332 et le coulisseau 319. Cette interaction est elle-même due à l'agencement relatif des logements 317 et 330.

Comme le montrent les figures 8 et 9, lorsque le dispositif d'actionnement est en position d'utilisation, la partie tronconique 337 du bouton 332 pénètre dans la creusure latérale du coulisseau 319. Dans cette position, cette partie tronconique du bouton empêche le recul de la partie antérieure du coulisseau et donc le retrait de la tête 320 du coulisseau du trou 324 de la tête 307 de la colonne de potence 304. De même, le bouton 332 empêche la rotation complète de la clé de la serrure 322, tout en n'empêchant pas une rotation partielle mais inopérante de celle-ci. Pour pouvoir effectuer une rotation complète de la clé, donc de l'excentrique 321 et par voie de conséquence, faire reculer le coulisseau vers le fond de son logement et le désengager du trou 324 de la tête de colonne, l'utilisateur est obligé d'enfoncer simultanément le bouton 332 dans son logement 330, comme l'illustrent les figures 6 et7. Cette double opération nécessite l'usage des deux mains tout en effectuant deux gestes différents. Un passage de la position utilisation à la position antivol par inadvertance est donc exclu.

Dans la position antivol illustrée par les figures 6 et 7, la partie antérieure épaisse du coulisseau 319 est en regard de la partie amincie 336 du bouton 332, alors que la portion tronconique 337 de celui-ci est bloquée au fond de son logement par le coulisseau. Dans cette situation, la tige 333 est en position proéminente. L'extrémité de la tige peut porter une marque de couleur pour rendre cette situation plus visible par l'utilisateur. Le retour de la position antivol à la position d'utilisation du véhicule ne nécessite pas d'intervention sur le bouton 332. L'utilisateur tourne simplement la clé et parfait l'alignement guidon-fourche. Dès que celui-ci est obtenu, le coulisseau 319 s'enclenche dans le trou 324 sous l'effet du ressort 318. La creusure latérale du coulisseau vient en regard du bouton 332, qui redescend automatiquement sous l'effet du ressort 334. La géometrie particulière de la partie tronconique 337 du bouton 332, qui vient appuyer sur l'arrière de la partie antérieure épaisse du coulisseau 319, contribue à éliminer un jeu éventuel entre tête du coulisseau et trou conjugué 324.

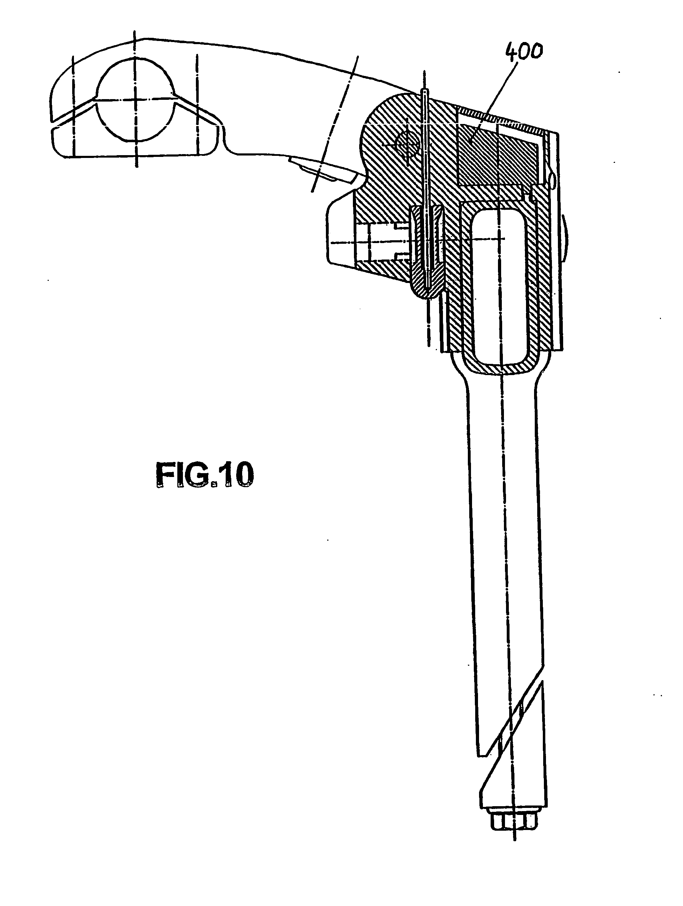

La figure 10 illustre schématiquement un quatrième mode d'exécution du dispositif antivol, comprenant les éléments précédemment décrits et intégrant de plus un dispositif d'alarme acoustique. Le dispositif d'alarme peut être logé dans un boîtier représenté schématiquement et désigné par la référence 400 sur la figure 10. Le boîtier accueille une source d'énergie telle qu'une pile, un générateur de bruit tel qu'un sifflet ou une petite sirène fonctionnant avec l'énergie de la pile, et un processeur électronique gérant l'ensemble. Le dispositif d'alarme comprend également un capteur de contact détectant en fin de course du guidon l'interaction entre une goupille de butée et l'extrémité d'une creusure similaires à l'une des goupilles 9, 109 ou 209 et à l'une des creusures 16, 106, 206 décrites précédemment. Ce dispositif d'alarme est activé et désactivé par la rotation de la clé de la serrure précédemment décrite. Il est en position activée lorsque la serrure est en position antivol. Le capteur détecte alors les rotations entre tête de potence et colonne, c'est-à-dire les mouvements relatifs entre guidon et fourche. Le processeur électronique déclenche le générateur de bruit après avoir détecté un nombre prédéterminé et programmable de déplacements du guidon, représentatif d'une tentative de vol ou de vandalisme.

Avantageusement, l'ensemble creusure + goupille de butée permet une libre course d'une amplitude de l'ordre de ≃ 180°, c'est à dire ≃ 90° de part et d'autre de la position d'alignement guidon/fourche. De la sorte, le dispositif selon l'invention a non seulement une fonction antivol, mais aussi facilite le rangement d'un véhicule à deux roues dans un lieu étroit puisque le guidon peut être mis parallèle avec la roue avant.

## Revendications

1. Dispositif antivol pour véhicules dirigés au moyen d'un guidon solidarisé avec une fourche (2, 102) accueillant une roue directrice, comprenant des premiers moyens de solidarisation (12, 112, 212) avec le guidon, des deuxièmes moyens de solidarisation (4, 5, 6, 104, 105, 106 205 206, 304) avec la fourche, des moyens d'accouplement (7, 11, 18, 19, 20, 24, 107, 111, 118, 119, 120, 124, 211, 218, 219, 220, 224, 318, 319, 320, 324) entre les dits premiers et deuxièmes moyens de solidarisation, et un dispositif d'actionnement (21-23, 121-123, 221-223, 321, 322) à deux positions, une position d'utilisation du véhicule bloquant tout mouvement relatif entre les dits premiers et deuxièmes moyens de solidarisation et une position antivol permettant une libre rotation entre les dits premiers et deuxièmes moyens de solidarisation, **caractérisé en ce que** le dispositif antivol comporte un mécanisme de sécurité (330-337), interagissant avec lesdits moyens d'accouplement, empêchant le passage de la position d'utilisation à la position antivol en l'absence d'un actionnement dudit dispositif de sécurité par l'utilisateur.

2. Dispositif antivol selon la revendication 1, **caractérisé en ce que** le dit dispositif d'actionnement comporte un mécanisme d'enclenchement (18, 21, 26, 118, 121, 126, 218, 318, 321), bloqué quand ledit dispositif d'actionnement est en position antivol, et activé quand le dispositif d'actionnement est en position d'utilisation, indépendamment des positions relatives du guidon et de la fourche.

3. Dispositif antivol selon la revendication 1, **caractérisé en ce qu'**en position antivol, une clé (23, 123, 223) peut être tournée pour activer le dispositif d'enclenchement et pour passer en position d'utilisation même si le guidon et la fourche ne sont pas alignés.

4. Dispositif antivol selon l'une des revendications 1 à 3, **caractérisé en ce que** les dits premiers moyens de solidarisation comprennent une tête de potence (12, 112, 212) présentant un logement cylindrique (13, 113, 213) accueillant une tête cylindrique (7, 107, 207) conjuguée d'une colonne et **en ce que** la dite tête de potence porte une goupille d'accouplement (20, 120, 220) à ressort (18, 118, 218, 318), actionnée par le dit dispositif d'actionnement, la dite goupille d'accouplement étant configurée pour s'engager dans un trou conjugué (24, 124, 224, 324) de la dite tête de colonne.

5. Dispositif antivol selon la revendication 4, **caractérisé en ce que** le dit dispositif d'actionnement comprend une serrure un demi-tour (21, 121, 221) logée dans la dite tête de potence, dont la rotation dans un sens fait sortir la dite goupille d'accouplement du dit trou conjugué de la tête de colonne et dont la rotation dans l'autre sens libère un ressort (18, 118, 218, 318) tendant à faire pénétrer la dite goupille d'accouplement dans le dit trou de la dite tête de colonne.

6. Dispositif antivol selon l'une des revendications 4 ou 5, **caractérisé en ce que** la dite goupille d'accouplement présente un profil conique et que la dite tête de colonne porte une bague d'indexation (8) avec un perçage conique de forme conjuguée à la forme de la goupille.

7. Dispositif antivol selon l'une des revendications 5 ou 6, **caractérisé en ce que** la serrure est montée dans le corps de la tête de potence par des moyens (25) accessibles uniquement depuis l'intérieur du dit logement cylindrique (13, 113, 213) de la tête de potence.

8. Dispositif antivol selon l'une des revendications 4 à 7, **caractérisé en ce que** la dite tête de colonne (7, 107) fait partie d'une colonne de potence (4, 104) munie de moyens pour être montée dans une colonne de fourche (3, 103).

9. Dispositif antivol selon la revendication 8, **caractérisé en ce que** la dite colonne de potence est montée dans la colonne de fourche (3, 103) au moyen d'une vis (6) dont la tête peut être brisée lors du montage.

10. Dispositif antivol selon l'une des revendications 4 à 7, **caractérisé en ce que** la dite tête de colonne (207) fait partie intégrante d'une colonne de fourche (203).

11. Dispositif antivol selon l'une des revendications précédentes, **caractérisé par** des moyens limiteurs de course (9, 16, 109, 116, 209, 216) pour limiter l'amplitude de la dite libre rotation à un arc de cercle, agencés à l'intérieur du dit dispositif antivol.

12. Dispositif antivol selon la revendication 11, **caractérisé en** de que les dits moyens limiteurs de course comprennent une goupille de butée (9, 109, 209) et une creusure en arc de cercle (16, 106, 206) agencés respectivement à l'intérieur du dit logement cylindrique de la tête de potence et sur la dite tête de colonne.

13. Dispositif antivol selon l'une des revendications précédentes, **caractérisé en ce que** le dit mécanisme de sécurité comprend un bouton (332) à ressort (334) empêchant la dite goupille d'accouplement de se désengager du dit trou conjugué de la dite tête de colonne.

14. Dispositif antivol selon la revendication 13, **caractérisé en ce que** ledit bouton (332) contribue à éliminer un jeu éventuel entre une tête conique de la dite goupille d'accouplement (20, 120, 220, 320) et le trou conjugué (24, 124, 224, 324).

15. Dispositif antivol selon l'une des revendications précédentes, **caractérisé en ce qu'**il comprend un dispositif d'alarme acoustique activé en position antivol et désactivé en position d'utilisation, détectant les mouvements relatifs du guidon par rapport à la fourche, émettant un signal sonore après détection d'un nombre prédéterminé des dits mouvements.

## Claims

1. An anti-theft device for vehicles steered by means of handlebar fixed to a fork (2, 102) accepting a steered wheel, comprising first means (12, 112, 212) of connection with the handlebar, second means (4, 5, 6, 104, 105, 106, 205, 206, 304) of connection with the fork, means (7, 11, 18, 19, 20, 24, 107, 111, 118, 119, 120, 124, 211, 218, 219, 220, 224, 318, 319, 320, 324) of coupling between the said first and second connection means, and a two-position actuation device (21-23, 121-123, 221-223, 321, 322), a position of use of the vehicle locking any relative movement between the said first and second connection means and an anti-theft position allowing free rotation between the said first and second connection means, **characterised in that** said anti-theft device comprises a safety mechanism (330-337), interacting with the said coupling means, preventing passage from the position of use to the anti-theft position in the absence of an actuation of the said safety device by the user.

2. An anti-theft device according to claim 1, **characterised in that** the said actuation device comprises an interlocking mechanism (18, 21, 26, 118, 121, 126, 218, 318, 321), locked when the said actuation device is in the anti-theft position and activated when the actuation device is in the position of use, independently of the relative positions of the handlebar and fork.

3. An anti-theft device according to claim 1, **characterised in that** in the anti-theft position, a key (23, 123, 223) can be turned to activate the actuation device and to pass in the position of use even if the handlebar and the fork are not aligned.

4. An anti-theft device according to one of claims 1 to 3, **characterised in that** the said first connection means comprise a stem head (12, 112, 212) having a cylindrical housing (13, 113, 213) accepting a conjugate cylindrical head (7, 107, 207) of a column and **in that** the said stem head carries a coupling pin (20, 120, 220) with a spring (18, 118, 218, 318), actuated by the said actuation device, the said coupling pin being configured so as to engage in a conjugate hole (24, 124, 224, 324) in the said column head.

5. An anti-theft device according to claim 4, **characterised in that** the said actuation device comprises a half-turn lock (21, 121, 221) housed in the said stem head, the rotation of which in one direction makes the said coupling pin emerge from the said conjugate hole in the column head and whose rotation in the other direction releases a spring (18, 118, 218, 318) tending to make the said coupling pin enter the said hole in the said column head.

6. An anti-theft device according to one of claims 4 or 5, **characterised in that** the said coupling pin has a conical profile and **in that** the said column head carries a locating ring (8) with a conical drilling with a shape conjugate with the shape of the pin.

7. An anti-theft device according to one of claims 5 or 6, **characterised in that** the lock is mounted in the body of the stem head by means (25) accessible solely from the inside of the said cylindrical housing (13, 113, 213) in the stem head.

8. An anti-theft device according to one of claims 4 to 7, **characterised in that** the said column head (7, 107) forms part of a stem column (4, 104) provided with means for being mounted in a fork column (3, 103).

9. An anti-theft device according to claim 8, **characterised in that** the said stem column is mounted in the fork column (3, 103) by means of a screw (6), the head of which can be broken at the time of assembly.

10. An anti-theft device according to one of claims 4 to 7, **characterised in that** the said column head (207) forms an integral part of a fork column (203).

11. An anti-theft device according to one of the preceding claims, **characterised by** travel limiting means (9, 16, 109, 116, 209, 216) for limiting the magnitude of the said free rotation to an arc of a circle, arranged inside the said anti-theft device.

12. An anti-theft device according to claim 11, **characterised in that** the said travel limiting means comprise a stop pin (9, 109, 209) and a hollow in an arc of a circle (16, 106, 206) arranged respectively inside the said cylindrical housing of the stem head and on the said column head.

13. An anti-theft device according to one of the preceding claims, **characterised in that** the said safety mechanism comprises a button (332) with a spring (334) preventing the said coupling pin from disengaging from the said conjugate hole in the said column head.

14. An anti-theft device according to claim 13, **characterised in that** said button (332) helps to eliminate a possible clearance between a conical head of said coupling pins (20, 120, 220, 320) and the conjugate hole (24, 124, 224, 324).

15. An anti-theft device according to one of the preceding claims, **characterised in that** it comprises an acoustic alarm device activated in the anti-theft position and deactivated in the position of use, detecting the relative movements of the handlebar with respect to the fork, emitting an audible signal after detection of a predetermined number of the said movements.

## Patentansprüche

1. Diebstahlsicherungsvorrichtung für Fahrzeuge, die mittels eines Lenkers gelenkt werden, der mit einer Gabel (2, 102) fest verbunden ist, die ein Leitrad aufnimmt, umfassend erste Mittel zur Verbindung (12, 112, 212) mit dem Lenker, zweite Mittel zur Verbindung (4, 5, 6, 104, 105, 106, 205, 206, 304) mit der Gabel, Kopplungsmittel (7, 11, 18, 19, 20, 24, 107, 111, 118, 119, 120, 124, 211, 218, 219, 220, 224, 318, 319, 320, 324) zwischen den ersten und zweiten Verbindungsmitteln und eine Betätigungsvorrichtung (21-23, 121-123, 221-223, 321, 322) mit zwei Positionen, einer Fahrzeugverwendungsposition, die jede relative Bewegung zwischen den ersten und zweiten Verbindungsmitteln blockiert, und eine Diebstahlsicherungsposition, die eine freie Drehung zwischen den ersten und zweiten Verbindungsmitteln erlaubt, **dadurch gekennzeichnet, dass** die Diebstahlsicherungsvorrichtung einen Sicherheitsmechanismus (330-337) umfasst, der mit den Kopplungsmitteln interagiert und den Übergang von der Verwendungsposition in die Diebstahlsicherungsposition in Abwesenheit einer Betätigung der Sicherheitsvorrichtung durch den Benutzer verhindert.

2. Diebstahlsicherungsvorrichtung nach Anspruch 1, **dadurch gekennzeichnet, dass** die Betätigungsvorrichtung einen Einrastmechanismus (18, 21, 26, 118, 121, 126, 218, 318, 321) umfasst, der blockiert ist, wenn sich die Betätigungsvorrichtung in der Diebstahlsicherungsvorrichtung befindet, und der aktiviert ist, wenn sich die Betätigungsvorrichtung in der Verwendungsposition befindet, und zwar unabhängig von den relativen Positionen des Lenkers und der Gabel.

3. Diebstahlsicherungsvorrichtung nach Anspruch 1, **dadurch gekennzeichnet, dass** in der Diebstahlsicherungsposition ein Schlüssel (23, 123, 223) gedreht werden kann, um die Einrastvorrichtung zu aktivieren und um in die Verwendungsposition überzugehen, selbst wenn sich der Lenker und die Gabel nicht in einer Linie befinden.

4. Diebstahlsicherungsvorrichtung nach einem der Ansprüche 1 - 3, **dadurch gekennzeichnet, dass** die ersten Verbindungsmittel einen Lenkerkopf (12, 112, 212) umfassen, der eine zylindrische Aufnahme (13, 113, 213) aufweist, die einen zugeordneten zylindrischen Kopf (7, 107, 207) eines Schafes aufnimmt, und dass der Lenkerkopf einen Kopplungsstift (20, 120, 220) mit Feder (18, 118, 218, 318) trägt, der durch die Betätigungsvorrichtung betätigt wird, wobei der Kopplungsstift so ausgestaltet ist, dass er in eine zugeordnete Öffnung (24, 124, 224, 324) des Schaftkopfes eingefügt werden kann.

5. Diebstahlsicherungsvorrichtung nach Anspruch 4, **dadurch gekennzeichnet, dass** die Betätigungsvorrichtung ein in dem Lenkerkopf untergebrachtes Halbtourschloss (21, 121, 221) umfasst, dessen Drehung in eine Richtung den Kopplungsstift aus der zugeordneten Öffnung des Schaftkopfes austreten lässt, und dessen Drehung in die andere Richtung eine Feder (18, 118, 218, 318) freigibt, die danach strebt, den Kopplungsstift in die Öffnung des Schaftkopfes eindringen zu lassen.

6. Diebstahlsicherungsvorrichtung nach einem der Ansprüche 4 oder 5, **dadurch gekennzeichnet, dass** der Kopplungsstift ein konisches Profil aufweist und dass der Schaftkopf einen Indexierungsring (8) mit einer konischen Bohrung trägt, deren Form der Form des Stifts zugeordnet ist.

7. Diebstahlsicherungsvorrichtung nach einem der Ansprüche 5 oder 6, **dadurch gekennzeichnet, dass** das Schloss im Körper des Lenkerkopfes durch Mittel (25) montiert ist, die nur von der Innenseite der zylindrischen Aufnahme (13, 113, 213) des Lenkerkopfes aus zugänglich sind.

8. Diebstahlsicherungsvorrichtung nach einem der Ansprüche 4 bis 7, **dadurch gekennzeichnet, dass** der Schaftkopf (7, 107) Teil eines Lenkerschafts (4, 104) ist, der mit Mitteln versehen ist, um in einem Gabelschaft (3, 103) montiert zu werden.

9. Diebstahlsicherungsvorrichtung nach Anspruch 8, **dadurch gekennzeichnet, dass** der Lenkerschaft im Gabelschaft (3, 103) mit Hilfe einer Schraube (6) montiert ist, deren Kopf bei der Montage abgebrochen werden kann.

10. Diebstahlsicherungsvorrichtung nach einem der Ansprüche 4 bis 7, **dadurch gekennzeichnet, dass** der Schaftkopf (207) integraler Bestandteil eines Gabelschafts (203) ist.

11. Diebstahlsicherungsvorrichtung nach einem der vorhergehenden Ansprüche, **gekennzeichnet durch** Wegbegrenzungsmittel (9, 16, 109, 116, 209, 216) zur Begrenzung des Umfangs der freien Drehung auf einen Kreisbogen, die im Inneren der Diebstahlsicherungsvorrichtung gebildet sind.

12. Diebstahlsicherungsvorrichtung nach Anspruch 11, **dadurch gekennzeichnet, dass** die Wegbegrenzungsmittel einen Anschlagstift (9, 109, 209) und eine kreisbogenförmige Ausnehmung (16, 106, 206) umfassen, die jeweils im Inneren der zylindrischen Aufnahme des Lenkerkopfes und am Schaftkopf gebildet sind.

13. Diebstahlsicherungsvorrichtung nach einem der vorhergehenden Ansprüche, **dadurch gekennzeichnet, dass** der Sicherheitsmechanismus einen Knopf (332) mit Feder (334) umfasst, der den Kopplungsstift daran hindert, sich von der zugeordneten Öffnung des Schaftkopfes zu lösen.

14. Diebstahlsicherungsvorrichtung nach Anspruch 13, **dadurch gekennzeichnet, dass** der Knopf (332) dazu beiträgt, ein eventuelles Spiel zwischen einem konischen Kopf des Kopplungsstifts (20, 120, 220, 320) und der zugeordneten Öffnung (24, 124, 224, 324) zu beseitigen.

15. Diebstahlsicherungsvorrichtung nach einem der vorhergehenden Ansprüche, **dadurch gekennzeichnet, dass** sie eine akustische Alarmvorrichtung umfasst, die in der Diebstahlsicherungsposition aktiviert ist und in der Verwendungsposition deaktiviert ist, die die relativen Bewegungen des Lenkers in Bezug auf die Gabel erkennt und ein Lautsignal ausgibt, nachdem eine vorbestimmte Zahl von Bewegungen erkannt wurde.
